# EUROPÄISCHE PATENTSCHRIFT

(11) **EP 2 459 968 B1**
(45) Veröffentlichungstag und Bekanntmachung des Hinweises auf die Patenterteilung: **03.01.2018**
(21) Anmeldenummer: 10720931.4
(22) Anmeldetag: 31.05.2010
(51) Int. Cl.: G01C 21/26, G01C 21/28, G08G 1/0968, G08G 1/0969

(54) **ELEKTRONISCHER HORIZONT FÜR EIN FAHRERASSISTENZSYSTEM**
ELECTRONIC HORIZON FOR A DRIVER ASSISTANCE SYSTEM
HORIZON ÉLECTRONIQUE POUR UN SYSTÈME D'ASSISTANCE À LA CONDUITE

(30) Priorität: 29.07.2009 DE 102009028070
(43) Veröffentlichungstag der Anmeldung: 06.06.2012
(73) Patentinhaber: Robert Bosch GmbH, 70442 Stuttgart (DE)
(72) Erfinder: VOGEL, Andreas, 31139 Hildesheim (DE)
(86) Internationale Anmeldenummer: PCT/EP2010/057543
(87) Internationale Veröffentlichungsnummer: WO 2011/012347

(56) Entgegenhaltungen:
- DE-A1-102004 031 802
- US-A1- 2008 249 706
- RESS C ET AL: "Electronic horizon - supporting ADAS applications with predictive map data" INTERNET CITATION 10. Oktober 2006 (2006-10-10), Seiten 1-8, XP002546070 Gefunden im Internet: URL:http://www.prevent-ip.org/download/Eve nts/20061008-12_ITS_WC_London/TS067/Paper% 201534.pdf [gefunden am 2009-09-16]
- Aris Polychronopoulos, Achim Beutner: ""The SAFELANE adaptive lane keeping support system."", , 17 November 2006 (2006-11-17), ICAT 2006, International Conference on Automotive Technologies, Istanbul, 17 November 2006 Retrieved from the Internet: URL:http://vpa2.sabanciuniv.edu/icatconf/i cat2000-2006/tr/data/b3-5-Aris%20Polychron opoulosicat_polychronopoulos.pdf [retrieved on 2015-10-16]
- A Polychronopoulos ET AL: "System Design of a Situation Adaptive Lane Keeping Support System, the SAFELANE System" In: "Advanced Microsystems for Automotive Applications 2005", 1 January 2005 (2005-01-01), Springer Berlin Heidelberg, Berlin, Heidelberg, XP055265598, ISBN: 978-3-540-24410-3 pages 169-183, DOI: 10.1007/3-540-27463-4_13, * page 7 - page 8 *

## Beschreibung

Die Erfindung betrifft ein Verfahren und eine Vorrichtung zum Bereitstellen eines elektronischen Horizonts für ein Fahrerassistenzsystem eines Kraftfahrzeugs.

### Stand der Technik

Der elektronische Horizont, der die Fahrstrecke des Kraftfahrzeugs in der nächsten Zukunft vorhersagt, dient als Basis für verschiedene Assistenz- oder Informationsfunktionen in dem Kraftfahrzeug. Der elektronische Horizont wird dabei mit Hilfe einer Heuristik, d.h. eines Algorithmus, der sich durch einen geringen Rechenaufwand und kurze Laufzeit auszeichnet, anhand von Karteninformationen des Straßennetzes in der Umgebung der aktuellen Position des Kraftfahrzeugs erzeugt.

Aus der DE 10 2005 049 133 ist ein Verfahren und eine Vorrichtung zur Bereitstellung eines elektronischen Horizonts für Fahrzeugassistenzsysteme eines Kraftfahrzeugs bekannt, bei dem der elektronische Horizont in mehreren Versionen mit unterschiedlichem Informationsumfang bereitgestellt wird, um den Fahrerassistenzsystemen nur die erforderlichen Informationen ohne zu viel unnötige Details zu übermitteln.

Die DE 10 2004 031 02 A1 zeigt ein Verfahren zur Ausgabe von Information über ein Verkehrswegenetz in einem Kraftfahrzeug, bei der die aktuelle Position des Kraftfahrzeugs ermittelt wird und zur Vorhersage eines Streckenverlaufs eine Wahrscheinlichkeit bestimmt wird, mit der ein Kraftfahrzeug eine bestimmte Strecke entlang fährt. A.Polychronopoulos, A.Beutner, "The SAFELANE adaptive lane keeping support system", ICAT (International Conference on Automotive Technologies) 2006, Istanbul, 17.November 2006 offenbart ein Spurhaltesystem mit elektronischem Horizont und statistischer Abschätzung der Zuverlässigkeit des Gesamtsystems.

Das Fahrerassistenzsystem des Kraftfahrzeugs kann auf der Grundlage des elektronischen Horizonts z.B. vor Kurven, Staus und weiteren Situationen automatisch warnen oder in Fahrzeugfunktionen direkt eingreifen. Dies kann nur dann optimal funktionieren, wenn der elektronische Horizont die zukünftige Fahrstrecke des Kraftfahrzeugs möglichst gut voraussagt. Wird der elektronische Horizont in die falsche Richtung ausgebaut, kann es zu falschen Warnungen bzw. Eingriffen in die Fahrzeugfunktionen kommen.

### Offenbarung der Erfindung

Aufgabe der Erfindung ist es, die Treffsicherheit und Verlässlichkeit des elektronischen Horizonts zu erhöhen.

Die Aufgabe wird durch ein Verfahren zum Bereitstellen eines elektronischen Horizonts für ein Fahrerassistenzsystem eines Kraftfahrzeugs nach Anspruch 1 sowie einer Vorrichtung zum Bereitstellen eines elektronischen Horizonts für ein Fahrerassistenzsystem eines Kraftfahrzeugs nach Anspruch 9 gelöst. Weitere vorteilhafte Ausführungsformen der Erfindung sind in den abhängigen Ansprüchen angegeben.

Erfindungsgemäß wird ein elektronischer Horizont für ein Fahrerassistenzsystem eines Kraftfahrzeugs mit Hilfe einer Heuristik anhand von Karteninformationen des Straßennetzes in der Umgebung der aktuellen Position des Kraftfahrzeugs erzeugt. Dabei wird eine Wahrscheinlichkeitsbetrachtung der Heuristik durchgeführt, um eine Zutreffwahrscheinlichkeit der Heuristik zu ermitteln.

Die erfindungsgemäße Vorgehensweise, bei der im Rahmen einer Wahrscheinlichkeitsbetrachtung eine Zutreffwahrscheinlichkeit der Heuristik zur Erstellung des elektronischen Horizontes durchgeführt wird, sorgt für eine erhöhte Sicherheit der Prognose, da die Aussagekraft und damit die Vertrauenswürdigkeit der Vorhersage bewertet und dann ggf. beim Einsatz des elektronischen Horizonts im Fahrerassistenzsystem z.B. Ausgaben im Rahmen von Warnungen bzw. des Eingriffs in Fahrzeugfunktionen berücksichtigt werden kann.

Gemäß einer bevorzugten Ausführungsform wird dabei eine statistische Bewertung der Zutreffwahrscheinlichkeit vorzugsweise mit Hilfe eines Statistikmoduls durchgeführt, wobei die ermittelten Zutreffwahrscheinlichkeiten der Heuristik erfasst und bewertet werden, um einen optimalen Wert zu ermitteln. Durch das Vorsehen eines Lernvorgangs kann die Bestimmung der Vertrauenswürdigkeit des ermittelten Horizonts weiter gesteigert werden. Erfindungsgemäß wird der elektronische Horizont aus wenigstens zwei unterschiedlichen Heuristiken zusammengesetzt, wobei die zwei unterschiedlichen Heuristiken mit Hilfe der Wahrscheinlichkeitsbetrachtung zu einer Gesamtaussage kombiniert werden. Durch die Berücksichtigung mehrerer Heuristiken und deren Kombination auf der Grundlage ihrer Wahrscheinlichkeitsbetrachtungen wird die Zutreffwahrscheinlichkeit des elektronischen Horizonts weiter wesentlich gesteigert. Dies gilt insbesondere, wenn gemäß einer bevorzugten Ausführungsform die Evidenztheorie zur Wahrscheinlichkeitsbetrachtung herangezogen wird.

Gemäß einer weiteren bevorzugten Ausführungsform basiert die Heuristik zum Erzeugen des elektronischen Horizonts auf dem Vergleich der aktuellen Fahrstreckendaten des Kraftfahrzeugs mit in der Vergangenheit zurückgelegten Fahrstreckendaten. Die Berücksichtigung der Fahrstreckenhistorie bei der Erstellung des elektronischen Horizonts gewährleistet eine hohe Zutreffwahrscheinlichkeit, da eine Wiederholung einer früheren Fahrstrecke sehr wahrscheinlich ist.

Gemäß einer weiteren bevorzugten Ausführungsform basiert die Heuristik zum Erzeugen des elektronischen Horizonts auf einem Vergleich von aktuellen Fahrstreckendaten des Kraftfahrzeugs mit gespeicherten Fahrstreckendaten anderer Fahrer in der Umgebung der aktuellen Position des Kraftfahrzeugs (sogenannten Fremdhistorien). Die Erstellung des elektronischen Horizonts auf der Grundlage von Fremdhistorien sorgt für eine hohe Allgemeingültigkeit.

Dies gilt auch, wenn gemäß einer weiteren bevorzugten Ausführungsform die Heuristik zum Erzeugen des elektronischen Horizonts auf gespeicherten Routenparametern basiert, aus denen z. B. gefolgert werden kann, welche Routenoptionen der Kraftfahrer bevorzugt oder vermeidet. Hierdurch lässt sich ein elektronischer Horizont mit hoher Zutreffwahrscheinlichkeit erzeugen.

Gemäß einer weiteren bevorzugten Ausführungsform basiert die Heuristik zum Erzeugen des elektronischen Horizonts auf gespeicherten Daten zum Fahrverhalten. Auf der Grundlage des Fahrerverhaltens, das z. B. von einem elektronischen Fahrtenschreiber erfasst und ständig aktualisiert werden kann, lässt sich eine hohe Zutreffsicherheit der Heuristik bei der Ermittlung des elektronischen Horizonts erreichen.

Die Erfindung wird im Folgenden anhand der beigefügten Zeichnung näher erläutert. In der Zeichnung zeigt:

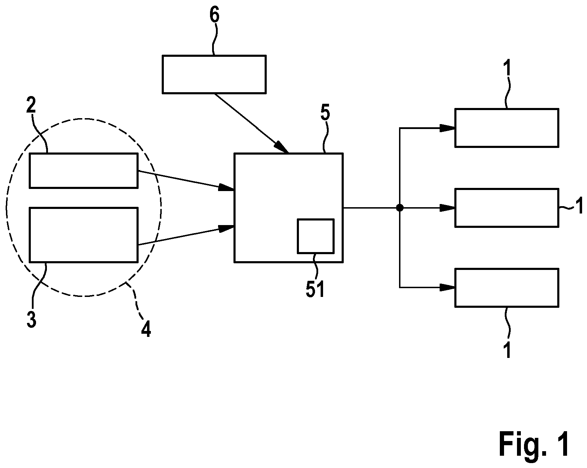

Fig.1 eine schematische Darstellung einer erfindungsgemäßen Vorrichtung zum Bereitstellen eines elektronischen Horizonts für ein Fahrerassistenzsystem eines Kraftfahrzeugs.

Figur 1 zeigt eine schematische Darstellung einer Vorrichtung zum Bereitstellen eines elektronischen Horizonts für Fahrerassistenzsysteme 1 eines Kraftfahrzeugs. Dabei weist die Vorrichtung einen Positionssensor 2 zum Bestimmen der aktuellen Position des Kraftfahrzeugs auf. Der Positionssensor 2 kann ein GPS oder irgendein anderes geeignetes satelliten- oder nicht satellitengestütztes Ortungssystem sein. Des Weiteren ist ein Datenspeicher 3 vorgesehen, in dem Karteninformationen eines Straßennetzes vorzugsweise in digitaler Form gespeichert sind. Der Positionssensor 2 und der Datenspeicher 3 können in einem Navigationssystem 4 angeordnet sein.

Die von dem Positionssensor 2 bestimmte aktuelle Position des Kraftfahrzeugs wird an eine Datenverarbeitungseinheit 5 als Positionssignal weitergeleitet. Ferner werden von der Datenverarbeitungseinheit 5 die Karteninformationen aus dem Datenspeicher 3 abgerufen. Des Weiteren ist die Datenverarbeitungseinheit 5 ausgebildet, um von einer Funkverbindung 6 übermittelte Daten zu empfangen und auszuwerten.

Aus der Gesamtheit aller empfangenen Signale erzeugt die Datenverarbeitungseinheit 5 die Daten, die den elektronischen Horizont darstellen. Der elektronische Horizont sagt die Fahrtstrecke des Kraftfahrzeugs in nächster Zukunft voraus.

Der elektronische Horizont wird dann an die angeschlossenen Fahrerassistenzsysteme 1 weitergeleitet, die auf der Grundlage des elektronischen Horizonts die Assistenz- und Informationsfunktionen im Kraftfahrzeug durchführen.

Der elektronische Horizont wird von der Datenverarbeitungseinheit 5 unter Verwendung einer Heuristik erzeugt. Die Heuristik stellt dabei einen Algorithmus zur Verfügung, bei dem mit geringem Rechenaufwand und kurzer Laufzeit die Daten des elektronischen Horizonts aus den empfangenen Daten erzeugt werden können. Da der erzeugte elektronische Horizont die Grundlage bildet, auf der die Fahrzeugassistenzsysteme 1 ihre Anwendungen ausführen, ist es erforderlich die Treffsicherheit und Zuverlässigkeit des elektronischen Horizonts einzuschätzen, dass heißt, die Prognose für die zukünftige Fahrtstrecke zu beurteilen.

Erfindungsgemäß wird deshalb von der Datenverarbeitungseinheit 5 eine Wahrscheinlichkeitsbetrachtung in Bezug auf die zum Erzeugen des elektronischen Horizonts eingesetzte Heuristik durchgeführt, wobei eine Zutreffwahrscheinlichkeit der Heuristik ermittelt wird. Hierdurch kann eine Aussage über die Vertrauenswürdigkeit des mit der Heuristik erzeugten elektronischen Horizonts gemacht werden, die dann von den Fahrzeugsassistenzsystemen beim Eingriff in die Fahrzeugfunktionen bzw. beim Ausgeben von Warnhinweisen berücksichtigt werden kann. So soll z. B. ein Bremseingriff durch ein Fahrzeugassistenzsystem wegen zu hoher Geschwindigkeit vor einer Kurve nur gemacht werden, wenn der elektronische Horizont mit nahezu einhundertprozentiger Sicherheit prognostiziert, dass das Fahrzeug sich auf diese Kurve zu bewegt. Eine einfache Warnung ohne aktiven Bremseingriff kann jedoch durch das Fahrzeugassistenzsystem bereits erfolgen, wenn der elektronische Horizont die Kurvenfahrt mit achtzigprozentiger Sicherheit prognostiziert.

Zum Ermitteln der Zutreffwahrscheinlichkeit der Heuristik werden die Methoden der Wahrscheinlichkeitsrechnung und dabei bevorzugt die Evidenztheorie eingesetzt. Dies wird im Folgenden am Beispiel einer Heuristik für den Aufbau eines elektrischen Horizonts, die eine Aussage über die Abbiegwahrscheinlichkeiten an Kreuzungen liefert, beispielhaft dargestellt. An einer Kreuzung besteht die Möglichkeit eines Abbiegens nach rechts, eines Geradeausfahrens und eines Abbiegens nach links. Dabei werden die Bezeichnungen {R}, {G}, {L} für genau Rechts, genau Gerade und genau Links verwendet. Für Links oder Rechts steht entsprechend die Bezeichnung {LR} und für nicht Links steht entsprechend {GR}: Eine Heuristik, die zu 100% sicher ist und sich für 20% Rechts, 50% Gerade und 30% Links entscheidet, ist dann einfach 20% {R}, 50% {G} und 30% {L}. Wenn diese Heuristik aber nur zu 50% sicher ist, dann sind die Wahrscheinlichkeiten bei 50% {RGL}, 10% {R}, 25% {G} und 15% {L}. Die Wahrscheinlichkeit für {RGL} drückt also das Nichtwissen aus. Eine Heuristik, die mit 70% Sicherheit zutrifft und sich für Rechts entscheidet, hat also für {RGL} 30% und für {R} 70%.

Um einen optimalen Wert beim Ermitteln der Zutreffwahrscheinlichkeit der Heuristik zu erhalten, wird in der Datenverarbeitungseinrichtung 5 mit Hilfe eines Statistikmoduls 51 vorzugsweise eine statistische Betrachtung durchgeführt. Hierzu werden die im Rahmen einer Wahrscheinlichkeitsbetrachtung der Heuristik bestimmten Zutreffwahrscheinlichkeiten gespeichert und anhand der sich dann wirklich ergebenden Fahrstrecke ausgewertet, um anschließend beim Erstellen weiterer elektronischer Horizonte auf der Grundlage der Heuristik verbesserte Werte zu erzielen.

Um die Treffsicherheit und Verlässlichkeit des elektronischen Horizonts weiter zu verbessern, wird der elektronische Horizont vorzugsweise aus wenigstens zwei unterschiedlichen Heuristiken zusammengesetzt, wobei die zwei unterschiedlichen Heuristiken mit Hilfe der Wahrscheinlichkeitsbetrachtung zu einer Gesamtaussage kombiniert werden. Die Kombination erfolgt dabei vorzugsweise wiederum mit der Evidenztheorie. Gemäß dem von Dempster und Shafer entwickelten Berechnungsverfahren lassen sich Zutreffwahrscheinlichkeiten zu einer Gesamtaussage kombinieren, um eine Gesamtabschätzung der Zutreffwahrscheinlichkeit des elektronischen Horizonts bereitzustellen.

Im Folgenden werden mögliche Heuristiken, deren Zutreffwahrscheinlichkeit im Rahmen der Wahrscheinlichkeitsbetrachtung vorzugsweise mit Hilfe der Evidenztheorie bestimmt wird, erläutert. Es besteht dabei die Möglichkeit, die nachstehenden Heuristiken beliebig zu kombinieren und mit Hilfe der Evidenztheorie zu einer Gesamtschätzung zu verdichten.

So besteht die Möglichkeit eine Heuristik auf der Grundlage der Fahrzeughistorie einzusetzen. Diese Daten werden z. B. vom Navigationssystem bereitgestellt, das mit Hilfe eines Fahrtenschreibers die gefahrenen Strecken des Fahrzeugs erfasst. Mit den Daten aus dem Fahrtenschreiber des Navigationssystems 4 kann dann die Ausbildung des elektronischen Horizonts erfolgen. Dabei wird die seit Beginn der aktuellen Fahrt zurückgelegte Fahrstrecke mit den gespeicherten bekannten Fahrstrecken verglichen. Für die Auswertung werden jedoch nicht alle Fahrten beachtet, sondern nur diejenigen, für welche die aktuelle gefahrene Fahrstrecke mit den gespeicherten Daten bereits über eine lange Fahrtstrecke übereinstimmt. Bei Feststellen einer Übereinstimmung kann die Wahrscheinlichkeit als hoch angesehen werden, dass der Kraftfahrzeugfahrer auch weiterhin auf der schon einmal gefahrenen Fahrtstrecke bleibt.

Die Abbiegewahrscheinlichkeit an einer Kreuzung lässt sich aus dem gespeicherten bekannten Abbiegeverhalten ermitteln. Dabei kann die Zutreffwahrscheinlichkeit aus dem Verhältnis der bisher durchgeführten Abbiegemanöver an den Kreuzungen berechnet werden. In einer weiteren Ausbaustufe oder Erweiterung kann auch Tageszeit und der Wochentag mit berücksichtigt werden. Fahrten, die gemäß den gespeicherten Daten immer ungefähr zu der aktuellen Tageszeit gestartet wurden, werden bei der Berechnung der Abbiegewahrscheinlichkeit höher gewichtet.

Die Heuristik auf der Grundlage der gefahrenen Fahrstrecken ist auf die Fahrstrecken begrenzt, auf denen das Kraftfahrzeug wenigstens einmal gefahren ist. Es besteht jedoch auch die Möglichkeit, eine Heuristik mit Fremdhistorien zu verwenden. Hierzu ruft die Datenverarbeitungseinheit 5 über die Funkverbindung 6 von einem Server gespeicherten Fahrtstreckendaten ab von fremden Kraftfahrzeugfahrern im Bereich des gerade befahrenen Gebiets, die vorzugsweise zur gleichen Tageszeit und am selben Wochentag erfolgt sind. Die Daten der vom Kraftfahrzeug zurückgelegten Fahrstrecke werden dann mit den vom Server abgerufenen Daten verglichen, um Übereinstimmungen zu ermitteln und daraus einen elektronischen Horizont aufzubauen.

Die Wahrscheinlichkeitsbetrachtung kann auch mit einer Heuristik auf der Grundlage von Routenparametern durchgeführt werden. Dabei werden die vom Kraftfahrzeugfahrer eingestellten Routenparameter, die im Navigationssystem 4 gespeichert sind und die bevorzugten Routenoptionen angeben, ausgewertet. Die Routenparameter können vor der ersten Fahrt durch den Kraftfahrzeugführer eingegeben werden und bei Bedarf abgerufen werden. Bei einer nicht aktiven Zielführung des Navigationssystems kann auf die letzte Einstellung der Routenparameter durch den Kraftfahrzeugführer zurückgegriffen werden. Hat der Kraftfahrzeugführer z.B. als Routenparameter eingegeben, dass er üblicherweise Tunnels und Autobahnen meidet, so erhält ein elektronischer Horizont eine geringe Zustellwahrscheinlichkeit, wenn die Fahrstreckenprognose durch einen Tunnel oder über eine Autobahn führt.

Für die Wahrscheinlichkeitsbetrachtung kann auch eine Heuristik verwendet werden, die auf dem Fahrerverhalten basiert. Dabei wird der elektronische Horizont unter Berücksichtigung des Fahrerverhaltens in einer bestimmten Situation berechnet. Hierzu wird vorzugsweise vom Navigationssystem 4 z.B. mit Hilfe eines Fahrtenschreibers das Fahrerverhalten erfasst. Erfasste Aussagen sind z. B., dass der Kraftfahrzeugfahrer Innenstädte, große Kreuzungen oder Linksabbiegen meidet. Das Navigationssystem 4 kann aber auch lernen, wie sich der Kraftfahrzeugfahrer in verschiedenen Situationen verhält. Dadurch kann die Zutreffwahrscheinlichkeit des elektronischen Horizonts erhöht werden. Ferner besteht z.B. die Möglichkeit aus einem ermittelten Geschwindigkeitsprofil vor einer Kreuzung auf eine mögliche bevorstehende Abbiegung zu schließen.

Die vorstehend erläuterten Heuristiken, d.h. eine Heuristik auf der Grundlage der eigenen Historie, eine Heuristik auf der Grundlage von Fremdhistorien, eine Heuristik auf der Grundlage von Routenoptionen und eine Heuristik auf der Grundlage des Fahrerverhaltens können dabei einzeln zur Erstellung des elektronischen Horizonts herangezogen werden, wobei jeweils eine Wahrscheinlichkeitsbetrachtung zum Ermitteln einer Zutreffwahrscheinlichkeit durchgeführt wird, um eine Aussage über die Zuverlässigkeit und Verlässlichkeit der Prognose zu machen, die dann dem Fahrerassistenzsystem zur Verfügung gestellt wird. Um die Treffsicherheit des elektronischen Horizonts zu erhöhen, werden erfingdungsgemäß wenigstens zwei der vorstehend genannten Heuristiken oder auch weitere mögliche Heuristiken gemischt, wobei der elektrische Horizont auf der Grundlage einer Gesamtaussage erfolgt, wobei die Zutreffwahrscheinlichkeiten der einzelnen Heuristiken vorzugsweise mit Hilfe der Evidenztheorie zu einer Gesamtabschätzung kombiniert werden. Durch Verwendung eines Statistikmoduls in der Datenverarbeitungseinheit lassen sich die einzelnen Heuristiken einer statistischen Bewertung unterwerfen, um die Zutreffwahrscheinlichkeiten zu erhöhen. Dabei besteht die Möglichkeit, einen Lernvorgang durchzuführen, bei dem die Zutreffwahrscheinlichkeit einer Heuristik auf der Grundlage der tatsächlichen Fahrweise bzw. Fahrstrecke verbessert wird.

## Patentansprüche

1. Verfahren zum Bereitstellen eines elektronischen Horizonts für ein Fahrerassistenzsystem eines Kraftfahrzeugs, bei dem die aktuelle Position des Kraftfahrzeugs ermittelt und der elektronische Horizont mit Hilfe einer Heuristik anhand von Karteninformationen des Straßennetzes in der Umgebung der aktuellen Position des Kraftfahrzeugs erzeugt wird,
**dadurch gekennzeichnet, dass**
eine Wahrscheinlichkeitsbetrachtung der Heuristik zum Erzeugen des elektronischen Horizonts durchgeführt wird, wobei eine Zutreffwahrscheinlichkeit der Heuristik ermittelt wird;
wobei der elektronische Horizont mit Hilfe wenigstens zweier unterschiedlicher Heuristiken aus einer Heuristik auf Grundlage der eigenen Historie, einer Heuristik auf der Grundlage von Fremdhistorien, einer Heuristik auf Grundlage von Routenoptionen und einer Heuristik auf der Grundlage des Fahrerverhaltens erzeugt wird, wobei die wenigstens zwei Heuristiken gemischt werden, indem die Zutreffwahrscheinlichkeiten der einzelnen Heuristiken mit Hilfe der Evidenztheorie zu einer Gesamtabschätzung kombiniert werden.

2. Verfahren nach Anspruch 1, **dadurch gekennzeichnet, dass** eine statistische Bewertung der Zutreffwahrscheinlichkeiten durchgeführt wird, um einen optimalen Wert zu ermitteln.

3. Verfahren nach einem der Ansprüche 1 bis 2, **dadurch gekennzeichnet, dass** die Heuristik auf Grundlage der eigenen Historie auf einem Vergleich von aktuellen Fahrstreckendaten des Kraftfahrzeugs mit in der Vergangenheit zurückgelegten Fahrstreckendaten basiert.

4. Verfahren nach einem der Ansprüche 1 bis 3, **dadurch gekennzeichnet, dass** die Heuristik auf der Grundlage von Fremdhistorien auf einem Vergleich von aktuellen Fahrstreckendaten des Kraftfahrzeugs mit gespeicherten Fahrstreckendaten in der Umgebung der aktuellen Position des Kraftfahrzeugs basiert.

5. Verfahren nach einem der Ansprüche 1 bis 4, **dadurch gekennzeichnet, dass** die Heuristik auf Grundlage von Routenoptionen auf gespeicherten Routenparametern basiert.

6. Verfahren nach einem der Ansprüche 1 bis 5, **dadurch gekennzeichnet, dass** die Heuristik auf Grundlage des Fahrerverhaltens auf gespeicherten Daten zum Fahrerverhalten basiert.

7. Vorrichtung zum Bereitstellen eines elektronischen Horizonts für ein Fahrerassistenzsystem (1) eines Kraftfahrzeugs mit einem Positionssensor (2) zum Ermitteln der aktuellen Position des Kraftfahrzeugs, einem Datenspeicher (3) zum Speichern von Karteninformationen eines Straßennetzes und einer Datenverarbeitungseinheit (5) zum Erzeugen des elektronischen Horizonts mit Hilfe einer Heuristik und anhand der gespeicherten Karteninformationen des Straßennetzes in der Umgebung der ermittelten Position des Kraftfahrzeugs,
**dadurch gekennzeichnet, dass**
die Datenverarbeitungseinheit (5) ausgebildet ist, eine Wahrscheinlichkeitsbetrachtung der Heuristik zum Erzeugen des elektronischen Horizonts durchzuführen und eine Zutreffwahrscheinlichkeit der Heuristik zu ermitteln,
wobei die Datenverarbeitungseinheit (5) ausgebildet ist, den elektronischen Horizont mittels wenigstens zweier unterschiedlicher Heuristiken aus einer Heuristik auf Grundlage der eigenen Historie, einer Heuristik auf der Grundlage von Fremdhistorien, einer Heuristik auf Grundlage von Routenoptionen und einer Heuristik auf der Grundlage des Fahrerverhaltens zu erzeugen und dabei die wenigstens zwei unterschiedlichen Heuristiken zu mischen, indem die Zutreffwahrscheinlichkeiten der einzelnen Heuristiken mit Hilfe der Evidenztheorie zu einer Gesamtabschätzung kombiniert werden.

8. Vorrichtung nach Anspruch 7, **dadurch gekennzeichnet, dass** die Datenverarbeitungseinheit (5) ein Statistikmodul (51) aufweist, das ausgebildet ist, die ermittelten Zutreffwahrscheinlichkeiten zu erfassen und zu bewerten, um einen optimalen Wert zu ermitteln.

## Claims

1. Method for providing an electronic horizon for a driver assistance system of a motor vehicle, in which the current position of the motor vehicle is ascertained and the electronic horizon is produced using a heuristic based on map information for the road network in the surroundings of the current position of the motor vehicle,
**characterized in that**
a probability contemplation for the heuristic for producing the electronic horizon is performed, with a correctness probability for the heuristic being ascertained;
wherein the electronic horizon is produced using at least two different heuristics from a heuristic on the basis of own history, a heuristic on the basis of other histories, a heuristic on the basis of route options and a heuristic on the basis of the driver behaviour, the at least two heuristics being mixed by virtue of the correctness probabilities of the individual heuristics being combined using evidence theory to form a total estimate.

2. Method according to Claim 1, **characterized in that** a statistical rating of the correctness probabilities is performed in order to ascertain an optimum value.

3. Method according to either of Claims 1 and 2, **characterized in that** the heuristic on the basis of own history is based on a comparison of current route data of the motor vehicle with route data covered in the past.

4. Method according to one of Claims 1 to 3, **characterized in that** the heuristic on the basis of other histories is based on a comparison of current route data of the motor vehicle with stored route data in the surroundings of the current position of the motor vehicle.

5. Method according to one of Claims 1 to 4, **characterized in that** the heuristic on the basis of route options is based on stored route parameters.

6. Method according to one of Claims 1 to 5, **characterized in that** the heuristic on the basis of the driver behaviour is based on stored data relating to the driver behaviour.

7. Apparatus for providing an electronic horizon for a driver assistance system (1) of a motor vehicle having a position sensor (2) for ascertaining the current position of the motor vehicle, a data memory (3) for storing map information for a road network and a data processing unit (5) for producing the electronic horizon using a heuristic and based on the stored map information for the road network in the surroundings of the ascertained position of the motor vehicle,
**characterized in that**
the data processing unit (5) is configured to perform a probability contemplation for the heuristic for producing the electronic horizon and to ascertain a correctness probability for the heuristic,
wherein the data processing unit (5) is configured to produce the electronic horizon by means of at least two different heuristics from a heuristic on the basis of own history, a heuristic on the basis of other histories, a heuristic on the basis of route options and a heuristic on the basis of the driver behaviour and in so doing to mix the at least two different heuristics by virtue of the correctness probabilities of the individual heuristics being combined using evidence theory to form a total estimate.

8. Apparatus according to Claim 7, **characterized in that** the data processing unit (5) has a statistics module (51) that is configured to detect and rate the ascertained correctness probabilities in order to ascertain an optimum value.

## Revendications

1. Procédé de mise à disposition d'un horizon électronique pour un système d'assistance au conducteur d'un véhicule automobile, avec lequel la position actuelle du véhicule automobile est déterminée et l'horizon électronique est généré à l'aide d'une heuristique au moyen d'informations cartographiques du réseau routier dans l'environnement de la position actuelle du véhicule automobile,
**caractérisé en ce que**
une considération de probabilité de l'heuristique est effectuée pour générer l'horizon électronique, une probabilité de pertinence de l'heuristique étant déterminée ;
l'horizon électronique étant généré à l'aide d'au moins deux heuristiques différentes composées d'une heuristique sur la base de l'historique propre, d'une heuristique sur la base d'historiques tiers, d'une heuristique sur la base d'options d'itinéraire et d'une heuristique sur la base du comportement de conduite, les au moins deux heuristiques étant mélangées **en ce que** les probabilités de pertinence des heuristiques individuelles sont combinées en une estimation globale à l'aide de la théorie de l'évidence.

2. Procédé selon la revendication 1, **caractérisé en ce qu'**une évaluation statistique des probabilités de pertinence est effectuée afin de déterminer une valeur optimale.

3. Procédé selon l'une des revendications 1 à 2, **caractérisé en ce que** l'heuristique sur la base de l'historique propre se base sur une comparaison de données de parcours actuelles du véhicule automobile avec des données de parcours parcourues dans le passé.

4. Procédé selon l'une des revendications 1 à 3, **caractérisé en ce que** l'heuristique sur la base de l'historique tiers se base sur une comparaison des données de parcours actuelles du véhicule automobile avec des données de parcours mémorisées dans l'environnement de la position actuelle du véhicule automobile.

5. Procédé selon l'une des revendications 1 à 4, **caractérisé en ce que** l'heuristique sur la base d'options d'itinéraire se base sur des paramètres d'itinéraire mémorisés.

6. Procédé selon l'une des revendications 1 à 5, **caractérisé en ce que** l'heuristique sur la base du comportement de conduite se base sur des données mémorisées à propos du comportement de conduite.

7. Dispositif de mise à disposition d'un horizon électronique pour un système d'assistance au conducteur (1) d'un véhicule automobile, comprenant un capteur de position (2) destiné à déterminer la position actuelle du véhicule automobile, une mémoire de données (3) destinée à mémoriser des informations cartographiques d'un réseau routier et une unité de traitement de données (5) destinée à générer l'horizon électronique à l'aide d'une heuristique et au moyen des informations cartographiques mémorisées du réseau routier dans l'environnement de la position déterminée du véhicule automobile,
**caractérisé en ce que**
l'unité de traitement de données (5) est configurée pour effectuer une considération de probabilité de l'heuristique en vue de générer l'horizon électronique et déterminer une probabilité de pertinence de l'heuristique,
l'unité de traitement de données (5) étant configurée pour générer l'horizon électronique au moyen d'au moins deux heuristiques différentes composées d'une heuristique sur la base de l'historique propre, d'une heuristique sur la base d'historiques tiers, d'une heuristique sur la base d'options d'itinéraire et d'une heuristique sur la base du comportement de conduite, et pour mélanger les au moins deux heuristiques différentes **en ce que** les probabilités de pertinence des heuristiques individuelles sont combinées en une estimation globale à l'aide de la théorie de l'évidence.

8. Dispositif selon la revendication 7, **caractérisé en ce que** l'unité de traitement de données (5) possède un module statistique (51) qui est configuré pour détecter et évaluer les probabilités de pertinence déterminées afin de déterminer une valeur optimale.
